# EUROPEAN PATENT APPLICATION

(11) **EP 4 629 720 A1**
(43) Date of publication of application: **08.10.2025**
(21) Application number: 22966867.8
(22) Date of filing: 30.11.2022
(51) Int. Cl.: H04W 72/04, H04L 5/00

(54) **COMMUNICATION LOCATING METHODS, APPARATUSES AND DEVICES, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/135684
(87) International publication number: WO 2024/113276

(57) **Abstract**

The present disclosure relates to communication locating methods, apparatuses and devices, and a storage medium. One method comprises: determining a sounding reference signal (SRS) configuration parameter, the SRS configuration parameter being applicable to a plurality of cells; and, on the basis of the SRS configuration parameter, sending an SRS, the SRS being used for location measurement. Configuring the SRS configuration parameter applicable to the plurality of cells can reduce the power consumption brought by using the SRS for location measurement.

## Description

### TECHNICAL FIELD

The present disclosure relates to the field of communication technologies, and in particular to a method and apparatus and device for communication positioning, and a storage medium.

### BACKGROUND

At present, some low-power consumption and high-precision positioning methods are mainly for positioning methods in a Radio Resource Control (RRC) inactive state or an RRC idle state. In traditional methods, reference signals used for uplink positioning, such as Sounding Reference Signals (SRSs), are configured per cell. When a terminal moves from one cell to another cell, it needs to re-obtain an SRS configuration. But obviously, this will lead to more power consumption.

Therefore, how to reduce the power consumption caused by frequently obtaining the SRS configuration has become an urgent problem to be solved.

### SUMMARY

In order to overcome the problems existing in the related arts, the present disclosure provides a method and apparatus and device for communication positioning, and a storage medium.

According to a first aspect of embodiments of the present disclosure, there is provided a method for communication positioning, which is applied to a terminal and includes: determining a Sounding Reference Signal (SRS) configuration parameter, wherein the SRS configuration parameter is applicable to a plurality of cells; and sending an SRS based on the SRS configuration parameter, wherein the SRS is configured for positioning measurement.

According to a second aspect of embodiments of the present disclosure, there is provided a method for communication positioning, which is applied to a network device, and includes: receiving a Sounding Reference Signal (SRS) sent, based on an SRS configuration parameter, by a terminal, wherein the SRS configuration parameter is applicable to a plurality of cells; and performing positioning measurement based on the SRS.

According to a third aspect of embodiments of the present disclosure, there is provided an apparatus for communication positioning, which is configured in a terminal and includes: a processing module, configured to determine a Sounding Reference Signal (SRS) configuration parameter, wherein the SRS configuration parameter is applicable to a plurality of cells; and a sending module, configured to send an SRS based on the SRS configuration parameter, wherein the SRS is configured for positioning measurement.

According to a fourth aspect of embodiments of the present disclosure, there is provided an apparatus for communication positioning, and the apparatus includes: a receiving module, configured to receive a Sounding Reference Signal (SRS) sent, based on an SRS configuration parameter, by a terminal, wherein the SRS configuration parameter is applicable to a plurality of cells; and a processing module, configured to perform positioning measurement based on the SRS.

According to a fifth aspect of embodiments of the present disclosure, there is provided a device for communication positioning, including: a processor; and a memory configured to store executable instructions of the processor, wherein the processor is configured to perform the method involved in the first aspect.

According to a sixth aspect of embodiments of the present disclosure, there is provided a device for communication positioning, including: a processor; and a memory configured to store executable instructions of the processor, wherein the processor is configured to perform the method involved in the second aspect.

According to a seventh aspect of embodiments of the present disclosure, there is provided a non-transitory computer-readable storage medium. Instructions in the storage medium, when executed by a processor of a terminal, enable the terminal to perform the method involved in the first aspect.

According to an eighth aspect of embodiments of the present disclosure, there is provided a non-transitory computer-readable storage medium. Instructions in the storage medium, when executed by a processor of a network device, enable the network device to perform the method involved in the second aspect.

The technical solutions provided by embodiments of the present disclosure may include the following beneficial effects: by configuring the SRS configuration parameter that can be applicable to the plurality of cells, the power consumption caused by using the SRS for positioning measurement can be reduced.

It should be noted that the above general description and the following detailed description are merely exemplary and explanatory and should not be construed as limiting of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain principles of the present disclosure.
FIG. 1 shows a schematic diagram of a wireless communication system according to an embodiment of the present disclosure.
FIG. 2 shows a flowchart of a method for communication positioning according to an embodiment of the present disclosure.
FIG. 3 shows a flowchart of another method for communication positioning according to an embodiment of the present disclosure.
FIG. 4 shows a flowchart of yet another method for communication positioning according to an embodiment of the present disclosure.
FIG. 5 shows a flowchart of still another method for communication positioning according to an embodiment of the present disclosure.
FIG. 6 shows a flowchart of another method for communication positioning according to an embodiment of the present disclosure.
FIG. 7 shows a flowchart of yet another method for communication positioning according to an embodiment of the present disclosure.
FIG. 8 shows a flowchart of still another method for communication positioning according to an embodiment of the present disclosure.
FIG. 9 shows a flowchart of another method for communication positioning according to an embodiment of the present disclosure.
FIG. 10 shows a flowchart of yet another method for communication positioning according to an embodiment of the present disclosure.
FIG. 11 shows a flowchart of still another method for communication positioning according to an embodiment of the present disclosure.
FIG. 12 shows a flowchart of another method for communication positioning according to an embodiment of the present disclosure.
FIG. 13 shows a schematic diagram of an apparatus for communication positioning according to an embodiment of the present disclosure.
FIG. 14 shows a schematic diagram of another apparatus for communication positioning according to an embodiment of the present disclosure.
FIG. 15 shows a schematic diagram of a device for communication positioning according to an embodiment of the present disclosure.
FIG. 16 shows a schematic diagram of another device for communication positioning according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with embodiments of the present disclosure.

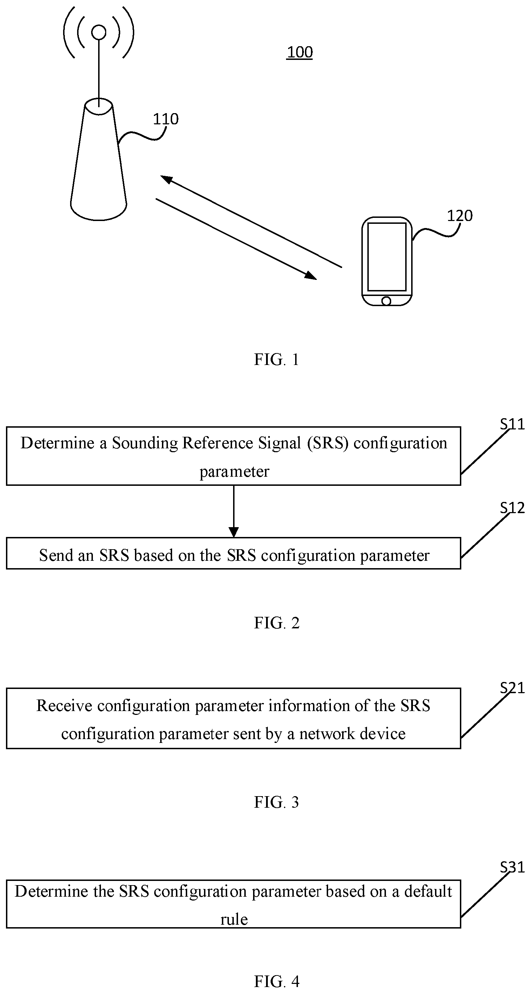

A communication method involved in the present disclosure can be applied to a wireless communication system 100 shown in FIG. 1. The network system may include a network device 110 and a terminal 120. It can be understood that the wireless communication system shown in FIG. 1 is only illustrative and may further include other network devices, for example, core network devices, radio relay devices, radio backhaul devices, etc., which are not depicted in FIG. 1. Embodiments of the present disclosure do not limit the number of network devices and the number of terminals included in the wireless communication system.

It can be further understood that the wireless communication system according to embodiments of the present disclosure is a network providing a wireless communication function. The wireless communication system may use different communication technologies, for example, Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. Networks may be classified into 2nd generation (2G) networks, 3G networks, 4G networks, or future evolved networks, for example, 5th Generation Wireless Communication System (5G) networks according to factors of capacity, rate, latency, etc. of different networks. The 5G networks may also be referred to as new radio (NR) networks. For convenience of description, the present disclosure sometimes refers to a wireless communication network simply as a network.

Further, the network device 110 involved in the present disclosure may also be referred to as a radio access network device. The radio access network device may be a base station, an evolved Node B (eNB), a home base station, a radio relay node, a radio backhaul node, a transmission point (TP), a transmission and receiving point (TRP) or an access point (AP) in a Wireless Fidelity (WIFI) system, etc., or may be a gNB in an NR system, or may be a component or some of devices constituting a base station, etc. When the wireless communication system is a vehicle-to-everything (V2X) communication system, the network device may also be a vehicle-mounted device. It is to be understood that embodiments of the present disclosure do not limit a particular technology and a particular device configuration used by the network device.

The network device 110 involved in the present disclosure may also be a core network device, and the core network device may include a location management function network element. In some embodiments, the location management function network element includes a location server, and the location server may be implemented as any one of the following: a Location Management Function (LMF), an Enhanced Serving Mobile Location Centre (E-SMLC), a Secure User Plane Location (SUPL), and a SUPL Location Platform (LP).

Further, the terminal 120 involved in the present disclosure may also be referred to as a terminal device, a user equipment (UE), a mobile station (MS), a mobile terminal (MT), etc., and is a device that provides a user with speech and/or data connectivity. For example, the terminal may be a handheld device, a vehicle-mounted device, etc. which has a radio connection function. Some instances of the terminal include a mobile phone, a pocket personal computer (PPC), a palmtop computer, a personal digital assistant (PDA), a laptop computer, a tablet computer, a wearable device, a vehicle-mounted device, etc. Moreover, when the wireless communication system is the vehicle-to-everything (V2X) communication system, the terminal device may also be a vehicle-mounted device. It is to be understood that embodiments of the present disclosure do not limit a particular technology and a particular device configuration used by the terminal.

In embodiments of the present disclosure, the network device 110 and the terminal 120 may use any feasible wireless communication technology to achieve mutual data transmission. A transmission channel corresponding to the network device 110 sending data to the terminal 120 is called a downlink channel (DL), and a transmission channel corresponding to the terminal 120 sending data to the network device 110 is called an uplink channel (UL). It can be understood that the network device involved in embodiments of the present disclosure may be a base station. Alternatively, the network device may also be any other possible network device, and the terminal may be any possible terminal, which is not limited by the present disclosure.

At present, some low-power consumption and high-precision positioning methods are discussed in Release (Rel) 18, which are positioning methods mainly for terminals in a RRC_INACTIVE state or a RRC_IDLE state. In traditional methods, reference signals used for uplink positioning, such as SRSs, are configured per cell. When a terminal moves from one cell to another cell, it needs to re-obtain an SRS configuration. But obviously, this will lead to more power consumption.

Therefore, how to reduce the power consumption caused by frequently obtaining the SRS configuration has become an urgent problem to be solved.

The present disclosure provides a method and apparatus and device for communication positioning, and a storage medium. By configuring an SRS configuration parameter that can be applicable to a plurality of cells, the power consumption caused by using the SRS for positioning measurement can be reduced.

FIG. 2 shows a flowchart of a method for communication positioning according to an embodiment of the present disclosure. As shown in FIG. 2, the method is applied to a terminal and may include steps S11 and S12.

In the step S11, a Sounding Reference Signal (SRS) configuration parameter is determined.

In some embodiments, the terminal may determine the SRS configuration parameter, and the SRS configuration parameter is applicable to a plurality of cells.

It can be understood that the SRS configuration parameters may be some configuration parameters related to sending the SRS, such as beam information related to the SRS, a path loss reference signal, etc. The beam information may include spatialrelationinfo or an Uplink Transmission Configuration Indication (UL TCI) state.

In the step S12, an SRS is sent based on the SRS configuration parameter.

In some embodiments, the terminal may send the SRS to a network device based on the SRS configuration parameter determined in the S11, so that the network device may perform positioning measurement based on the SRS sent by the terminal. It can be understood that the network device that performs the positioning measurement based on the SRS includes a TRP.

In the present disclosure, by configuring the SRS configuration parameter that can be applicable to the plurality of cells, the power consumption caused by using the SRS for positioning measurement can be reduced.

In the communication method provided by embodiments of the present disclosure, determining the SRS configuration parameter in the step S11 may include: receiving configuration parameter information of the SRS configuration parameter sent by the network device, and/or determining the SRS configuration parameter based on a default rule.

FIG. 3 shows a flowchart of another method for communication positioning according to an embodiment of the present disclosure. As shown in FIG. 3, determining the SRS configuration parameter in the step S11 may include a step S21.

In the step S21, configuration parameter information of the SRS configuration parameter sent by a network device is received.

In some embodiments, the terminal may receive the parameter configuration information sent by the network device, and the parameter configuration information is configuration parameter information related to the SRS configuration parameter. It can be understood that the terminal may determine the corresponding SRS configuration parameter based on the parameter configuration information.

FIG. 4 shows a flowchart of yet another method for communication positioning according to an embodiment of the present disclosure. As shown in FIG. 4, determining the SRS configuration parameter in the step S11 may include a step S31.

In the step S31, the SRS configuration parameter is determined based on a default rule.

In some embodiments, the terminal may determine the SRS configuration parameter based on the default rule. For example, the default rule may be preset or may be predefined in a protocol, which is not limited in the present disclosure.

The present disclosure provides a variety of ways to determine the SRS configuration parameter, so as to configure the SRS configuration parameter that can be applicable to the plurality of cells, thereby reducing the power consumption caused by using the SRS for positioning measurement.

In the communication method provided by embodiments of the present disclosure, in response to the SRS configuration parameter being associated with a reference signal, the configuration parameter information includes a reference signal identifier.

In some embodiments, the SRS configuration parameter may be associated with the reference signal, in which case the configuration parameter information may include the reference signal identifier. The SRS configuration parameter is associated with the reference signal, which may be understood as beam information in the SRS configuration parameter being a beam corresponding to the reference signal, and the path loss reference signal in the SRS configuration parameter being the reference signal. In other words, the spatial relation information or QuasiCo-Location (QCL) Type D information when the SRS is sent is the same as spatial relation information or QCL Type D information corresponding to the reference signal, and a transmission power when the SRS is sent is determined by the received signal strength when the reference signal is received.

For example, the identifier can be an Identity (ID) or an index.

For example, the terminal may receive the configuration parameter information sent by the network device, and the configuration parameter information includes the reference signal identifier. The terminal may determine, based on the reference signal identifier and according to an association relationship between the SRS configuration parameter and the reference signal, the SRS configuration parameter corresponding to the reference signal identifier, so that the terminal can send the SRS to the network device based on the SRS configuration parameter.

For another example, the terminal may determine the configuration parameter information based on the preset default rule, and the configuration parameter information includes the reference signal identifier. The terminal may determine, based on the reference signal identifier and according to the association relationship between the SRS configuration parameter and the reference signal, the SRS configuration parameter corresponding to the reference signal identifier, so that the terminal may send the SRS to the network device based on the SRS configuration parameter. The SRS configuration parameter is associated with the reference signal, which can be understood that the beam information in the SRS configuration parameter is the beam corresponding to the reference signal, and the path loss reference signal in the SRS configuration parameter is the reference signal. In other words, the spatial relation information or the QCL Type D information when the SRS is sent is the same as the spatial relation information or the QCL Type D information corresponding to the reference signal; and the transmission power when the SRS is sent is determined by the received signal strength when the reference signal is received.

In the present disclosure, the SRS configuration parameter is associated with the reference signal, so that the corresponding SRS configuration parameter that can be applicable to the plurality of cells can be determined through the reference signal identifier, which can reduce the power consumption caused by using the SRS for positioning measurement.

In the communication method provided by embodiments of the present disclosure, in response to determining the SRS configuration parameter based on the default rule, the default rule includes: the reference signal being determined based on the signal strength of the received reference signal; and the SRS configuration parameter associated with the reference signal being determined according to the reference signal.

In some embodiments, in response to the terminal determining the SRS configuration parameter based on the default rule, the default rule may include: the terminal determining the SRS configuration parameter based on the signal strength of the received reference signal.

For example, after receiving a reference signal, the terminal determines a signal strength of the reference signal. If the signal strength of the reference signal is greater than or equal to a preset reference signal threshold, the terminal can determine the SRS configuration parameter associated with the reference signal and send the SRS based on the SRS configuration parameter. Since the terminal already knows the SRS configuration parameter associated with the reference signal in advance, the terminal can determine, based on the reference signal, the SRS configuration parameter associated with the reference signal. That is, it can be understood that the terminal already knows SRS configuration parameters associated with different reference signals in advance, and the terminal can determine, based on signal strengths of individual reference signals, that the SRS can be sent based on the SRS configuration parameter associated with the specified reference signal, and the signal strength of the specified reference signal needs to be greater than or equal to the preset reference signal threshold.

For example, after receiving a Synchronization Signal Block (SSB), the terminal may determine a Reference Signal Receiving Power (RSRP) of the SSB. If the RSRP of the SSB is greater than or equal to a preset SSB threshold, it may be determined that the SSB is a specified SSB, and it may be determined that the SRS may be sent based on the SRS configuration parameter associated with the specified SSB.

In the present disclosure, the SRS configuration parameter than can be applicable to the plurality of cells can be determined according to the signal strength of the reference signal, which can reduce the power consumption caused by using the SRS for positioning measurement.

In the communication method provided by embodiments of the present disclosure, the method may further include: determining, based on reference signal information, an SRS resource corresponding to the reference signal, and the reference signal information includes a reference signal time domain position and/or a reference signal identifier; and/or determining, based on first information, the SRS resource corresponding to the reference signal, and the first information includes a paging Radio Network Temporary Identity (RNTI) and/or a paging time domain position of the terminal.

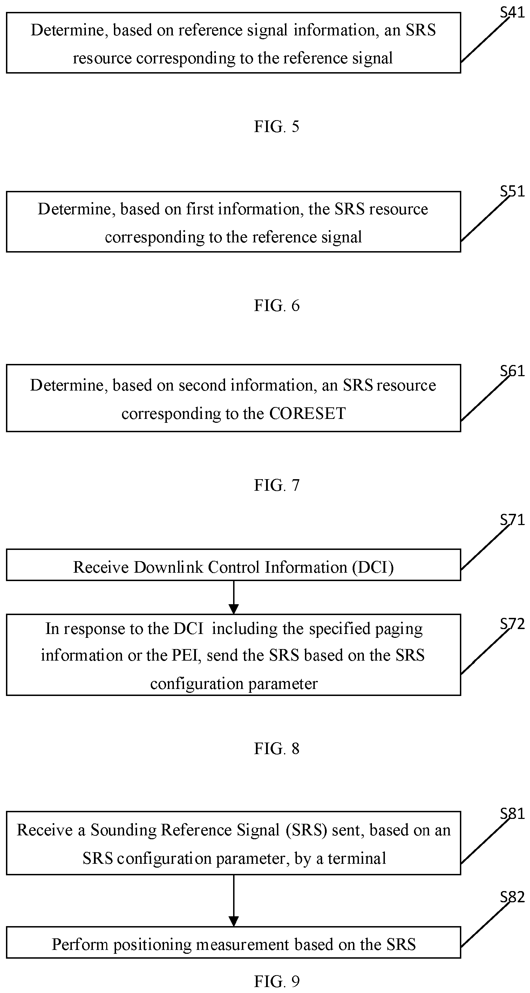

FIG. 5 shows a flowchart of still another method for communication positioning according to an embodiment of the present disclosure. As shown in FIG. 5, the method may further include a step S41.

In the step S41, an SRS resource corresponding to the reference signal is determined based on reference signal information.

In some embodiments, the terminal may determine, based on the reference signal information, the SRS resource corresponding to the reference signal. The reference signal information may include the reference signal time domain position and/or the reference signal identifier. It can also be understood that the reference signal information has a certain correlation with the SRS resource.

For example, after determining the reference signal identifier in the configuration parameter information, and/or determining the time domain position of the reference signal based on the received reference signal, the terminal can determine, based on the reference signal time domain position and/or the reference signal identifier, the SRS resource corresponding to the reference signal. Therefore, it can also be considered that SRS resources corresponding to different reference signal time domain positions and/or reference signal identifiers are related to the reference signal information. It can be understood that the SRS resource is a resource used to send the SRS. Alternatively, since the SRS configuration parameters are some configuration parameters related to sending the SRS, the SRS resource can also be considered as a resource corresponding to the SRS configuration parameter. A correspondence between the reference signal information and the SRS resources can be determined based on configuration information sent by the network device, or based on a default rule.

Taking the reference signal as the SSB as an example, the SRS resource, such as an SRS time domain resource, may be at K1 symbols after a time domain position of the SSB. Taking the reference signal as a Tracking Reference Signal (TRS) as an example, the SRS resource, such as the SRS time domain resource, may be at K2 symbols after a time domain position of the TRS.

Alternatively, the reference signal information may also include any other possible information related to the reference signal, which is not limited in the present disclosure.

FIG. 6 shows a flowchart of another method for communication positioning according to an embodiment of the present disclosure. As shown in FIG. 6, the method may further include a step S51.

In the step S51, an SRS resource corresponding to the reference signal is determined based on first information.

In some embodiments, the terminal may determine, based on the first information, the SRS resource corresponding to the reference signal. The first information includes a paging RNTI and/or a paging time domain position of the terminal. It can also be understood that the first information has a certain correlation with the SRS resource. The first information can be considered as terminal information related to the terminal.

For example, the terminal may determine, based on the paging RNTI and/or the paging time domain position of the terminal, the SRS resource corresponding to the reference signal. Therefore, it can also be considered that the paging RNTI and/or the paging time domain position of the terminal are related to the SRS resource.

Alternatively, the first information may also include any other possible information related to the terminal, which is not limited in the present disclosure.

The present disclosure provides a variety of ways to determine the SRS resource, so that the SRS of the SRS configuration parameter applicable to the plurality of cells can be sent based on the SRS resource, which can reduce the power consumption caused by using the SRS for positioning measurement.

In the communication method provided by embodiments of the present disclosure, SRS resources corresponding to the same reference signal information in different cells have the same configuration.

In some embodiments, in the different cells, the SRS resources corresponding to the same reference signal information have the same configuration.

For example, in the different cells, the terminal can determine, through the same reference signal information, the SRS resources with the same configuration, so that the terminal can send the SRS using the same SRS resource in the different cells.

In the present disclosure, the same reference signal information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In the communication method provided by embodiments of the present disclosure, different reference signal information corresponds to different SRS configuration parameters.

In some embodiments, the SRS configuration parameters corresponding to the different reference signal information are different. It can also be considered that SRS configuration parameters corresponding to the same reference signal information are the same.

For example, the terminal may determine, through different reference signal information, different SRS configuration parameters applicable to the plurality of cells.

For another example, in the different cells, the terminal can determine the same SRS configuration parameter through the same reference signal information.

In the present disclosure, the same reference signal information corresponds the same SRS configuration parameter, so that the terminal can send the SRS using the same SRS configuration parameter in the different cells, thereby reducing the power consumption caused by using the SRS for positioning measurement.

In the communication method provided by embodiments of the present disclosure, the reference signal includes at least one of: a Synchronization Signal Block (SSB); a Channel State Information Reference Signal (CSI-RS); or a Tracking Reference Signal (TRS).

In some embodiments, the reference signal may be the SSB. In this case, the reference signal identifier may be an SSB ID.

In some embodiments, the reference signal may be the CSI-RS. In this case, the reference signal identifier may be a CSI-RS ID.

In some embodiments, the reference signal may be the TRS. In this case, the reference signal identifier may be a TRS ID.

In some embodiments, the reference signal may be the SSB and the CSI-RS. In this case, the reference signal identifier may be the SSB ID and the CSI-RS ID.

In some embodiments, the reference signal may be the SSB and the TRS. In this case, the reference signal identifier may be the SSB ID and the TRS ID.

In some embodiments, the reference signal may be the CSI-RS and the TRS. In this case, the reference signal identifier may be the CSI-RS ID and the TRS ID.

In some embodiments, the reference signal may be the SSB, the CSI-RS and the TRS. In this case, the reference signal identifier may be the SSB ID, the CSI-RS ID and the TRS.

The present disclosure is applicable to situations of a variety of different reference signals. By configuring the SRS configuration parameter that can be applicable to the plurality of cells, the power consumption caused by using the SRS for positioning measurement can be reduced.

In the communication method provided by embodiments of the present disclosure, in response to the SRS configuration parameter being associated with a TCI state of a Control Resource Set (CORESET), the configuration parameter information includes a CORESET identity corresponding to the SRS configuration parameter.

In some embodiments, the SRS configuration parameter may be associated with the TCI state of the CORESET. In this case, the configuration parameter information may include the CORESET identity corresponding to the SRS configuration parameter.

For example, the terminal can receive the configuration parameter information sent by the network device, and the configuration parameter information includes the CORESET identity. The terminal can then determine, based on the CORESET identity and according to an association relationship between the SRS configuration parameters and the CORESETs, the SRS configuration parameter corresponding to the CORESET identity. It can be understood that the CORESET identity can indicate a specified CORESET, and then the TCI state of the specified CORESET can be determined. The TCI state will indicate the reference signal identifier corresponding to the QCL Type D, and/or the path loss reference signal identifier. Therefore, it can also be considered that the SRS configuration parameter can be determined based on the TCI state of the CORESET, and the terminal can send the SRS to the network device based on the SRS configuration parameter determined based on the TCI state of the CORESET.

For another example, the terminal may determine the configuration parameter information based on the preset default rule, and the configuration parameter information includes the CORESET identity. The terminal may determine, based on the CORESET identity and according to the association relationship between the SRS configuration parameters and the CORESETs, the SRS configuration parameter corresponding to the CORESET identity. That is, since the TCI state indicates the reference signal identifier corresponding to the QCL Type D, and/or the path loss reference signal identifier, the SRS configuration parameter may be determined based on the TCI state of the CORESET, so that the terminal sends the SRS to the network device based on the SRS configuration parameter.

In the present disclosure, the SRS configuration parameter is associated with the CORESET, so that the TCI state corresponding to the specified CORESET can be indicated by the CORESET identity, and the corresponding SRS configuration parameter that can be applicable to the plurality of cells can be determined, which can reduce the power consumption caused by using the SRS for positioning measurement.

In the communication method provided by embodiments of the present disclosure, in response to determining the SRS configuration parameter based on the default rule, the default rule includes: the SRS configuration parameter being determined based on the TCI state of the CORESET corresponding to the paging information.

In some embodiments, in response to the terminal determining the SRS configuration parameter based on the default rule, the default rule may include: the terminal determining the SRS configuration parameter based on the TCI state of the CORESET corresponding to the paging information.

For example, the SRS configuration parameter is pre-associated with the TCI state of the CORESET, so the terminal can determine, according to the TCI state of the CORESET corresponding to the paging information, the SRS configuration parameter associated with the TCI state of the CORESET. That is, since the TCI state indicates the reference signal identifier corresponding to the QCL Type D and/or the path loss reference signal identifier, the SRS configuration parameter can be determined based on the TCI state of the CORESET, so that the terminal can determine the SRS configuration parameter based on the TCI state of the CORESET.

In the present disclosure, the SRS configuration parameter that can be applicable to the plurality of cells can be determined according to the TCI state of the CORESET corresponding to the paging information, which can reduce the power consumption caused by using the SRS for positioning measurement.

In the communication method provided by embodiments of the present disclosure, FIG. 7 shows a flowchart of yet another method for communication positioning according to an embodiment of the present disclosure. As shown in FIG. 7, the method may further include a step S61.

In the step S61, an SRS resource corresponding to the CORESET is determined based on second information.

In some embodiments, the terminal may determine, based on the second information, the SRS resource corresponding to the CORESET. The second information includes at least one of a paging time domain position, a paging identity, or a paging RNTI. It can also be considered that the terminal determines, based on the second information, the SRS resource corresponding to the TCI state of the CORESET.

The second information may include the paging time domain position, the paging identity and/or the paging RNTI. It can also be understood that the second information has a certain correlation with the SRS resource. The second information may be considered as paging information related to the paging.

For example, the terminal may determine the SRS resource corresponding to the CORESET based on the paging time domain position, the paging identity and/or the paging RNTI. Therefore, it can also be considered that the paging time domain position, the paging identity and/or the paging RNTI are related to the SRS resource.

For example, the SRS resource, such as the SRS time domain resource, may be at K3 symbols after the paging time domain position.

For another example, the SRS resource is related to the paging RNTI, that is, SRS resources of the terminal corresponding to different paging RNTIs can be distinguished to prevent collision.

Alternatively, the second information may also include any other possible information related to the paging, which is not limited in the present disclosure.

The present disclosure provides a way to determine the SRS resource, so that the SRS of the SRS configuration parameter applicable to the plurality of cells can be sent based on the SRS resource, which can reduce the power consumption caused by using the SRS for positioning measurement.

In the communication method provided by embodiments of the present disclosure, SRS resources corresponding to the same second information in different cells have the same configuration.

In some embodiments, in the different cells, the SRS resources corresponding to the same second information have the same configuration.

For example, in the different cells, the terminal can determine, through the same second information, the SRS resources with the same configuration, so that the terminal can send the SRS using the same SRS resource in the different cells.

In the present disclosure, the same second information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In the communication method provided by embodiments of the present disclosure, different TCI states correspond to different SRS configuration parameters.

In some embodiments, the SRS configuration parameters corresponding to the different TCI states are different. It can also be considered that the same TCI state corresponds to the same SRS configuration parameter.

For example, the terminal can determine, through the different TCI states, different SRS configuration parameters applicable to the plurality of cells. The different TCI states refer to at least one of the reference signal identifier corresponding to the QCL Type D and/or the path loss reference signal identifier indicated by the TCI state being different.

For another example, in the different cells, the terminal can determine the same SRS configuration parameter through the same TCI state.

It can be understood that the terminal can determine, based on the paging information, the corresponding CORESET that sends the paging, and determine the SRS configuration parameter based on the TCI state of the CORESET. Therefore, it can also be considered that the SRS configuration parameters corresponding to the paging information from different CORESETs are different.

In the present disclosure, the same TCI state corresponds to the same SRS configuration parameter, so that the terminal can send the SRS using the same SRS configuration parameter in the different cells, thereby reducing the power consumption caused by using the SRS for positioning measurement.

In the communication method provided by embodiments of the present disclosure, different SRS configuration parameters correspond to different SRS resources, and the SRS resource includes at least one of: a time domain resource, a frequency domain resource or an SRS reference signal sequence.

In some embodiments, the SRS resource may include the time domain resource.

In some embodiments, the SRS resource may include the frequency domain resource.

In some embodiments, the SRS resource may include the SRS reference signal sequence.

In some embodiments, the SRS resource may include the time domain resource and the frequency domain resource.

In some embodiments, the SRS resource may include the time domain resource and the SRS reference signal sequence.

In some embodiments, the SRS resource may include the frequency domain resource and the SRS reference signal sequence.

In some embodiments, the SRS resource may include the time domain resource, the frequency domain resource, and the SRS reference signal sequence.

The present disclosure provides a variety of implementations of the SRS resource, so that a terminal can use the SRS resources in the different cells to send the SRS of the SRS configuration parameter applicable to the plurality of cells, thereby reducing the power consumption caused by using the SRS for positioning measurement.

In the communication method provided by embodiments of the present disclosure, the SRS configuration parameter includes at least one of: spatial relation information (e.g., spatialrelationinfo), Uplink (UL) TCI state information or a pathloss Reference Signal (RS).

In some embodiments, the SRS configuration parameter may include the spatialrelationinfo.

In some embodiments, the SRS configuration parameter may include the UL TCI state information.

In some embodiments, the SRS configuration parameter may include the pathloss RS.

In some embodiments, the SRS configuration parameter may include the spatialrelationinfo and the UL TCI state information.

In some embodiments, the SRS configuration parameter may include the spatialrelationinfo and the pathloss RS.

In some embodiments, the SRS configuration parameter may include the UL TCI state information and the pathloss RS.

In some embodiments, the SRS configuration parameter may include the spatialrelationinfo, the UL TCI state information, and the pathloss RS.

The spatialrelationinfo and the UL TCI state information can be considered as configuration parameters related to the beam of the SRS.

The present disclosure provides a variety of implementations of the SRS configuration parameter. By configuring the SRS configuration parameter that can be applicable to the plurality of cells, the power consumption caused by using the SRS for positioning measurement can be reduced.

In the communication method provided by embodiments of the present disclosure, FIG. 8 shows a flowchart of still another method for communication positioning according to an embodiment of the present disclosure. As shown in FIG. 8, the method may further include steps S71 and S72.

In the step S71, Downlink Control Information (DCI) is received.

In some embodiments, the terminal may also receive the Downlink Control Information (DCI). The DCI may include specified paging information or Paging Early Indication (PEI). The specified paging information or the PEI is intended to indicate the terminal to send the SRS. The specified paging information or the PEI may include paging information corresponding to an RNTI for indicating the terminal to send the SRS, or the DCI may include an information field for indicating the terminal to send the SRS.

In the step S72, in response to the DCI including the specified paging information or the PEI, the SRS is sent based on the SRS configuration parameter.

In some embodiments, in response to the DCI received in the S51 including the specified paging information or the PEI, the terminal may send the SRS to the network device based on the SRS configuration parameter.

In the present disclosure, when the DCI indicates the terminal to send the SRS, the SRS can be sent based on the SRS configuration parameter that can be applicable to the plurality of cells, thereby reducing the power consumption caused by using the SRS for positioning measurement.

Based on the same concept, the present disclosure also provides a method for communication positioning, which is suitable for being performed by the network device.

FIG. 9 shows a flowchart of another method for communication positioning according to an embodiment of the present disclosure. As shown in FIG. 9, the method is applied to a network device and may include steps S81 and S82.

In the step S81, a Sounding Reference Signal (SRS) sent by a terminal based on an SRS configuration parameter is received.

In some embodiments, the network device may receive the SRS sent by the terminal, and the SRS is sent by the terminal based on the SRS configuration parameter. The SRS configuration parameter is applicable to a plurality of cells.

It can be understood that the SRS configuration parameters may be some configuration parameters related to sending the SRS, such as beam information related to the SRS, a path loss reference signal, etc. The beam information may include spatialrelationinfo or an UL TCI state.

In the step S82, positioning measurement is performed based on the SRS.

In some embodiments, the network device may perform the positioning measurement on the terminal based on the SRS received in the S61. It can be understood that the network device that performs the positioning measurement based on the SRS includes a TRP.

In the present disclosure, by configuring the SRS configuration parameter that can be applicable to the plurality of cells, the power consumption caused by using the SRS for positioning measurement can be reduced.

In the communication method provided by embodiments of the present disclosure, the method may further include: sending configuration parameter information of the SRS configuration parameter; and/or, determining the SRS configuration parameter based on a default rule.

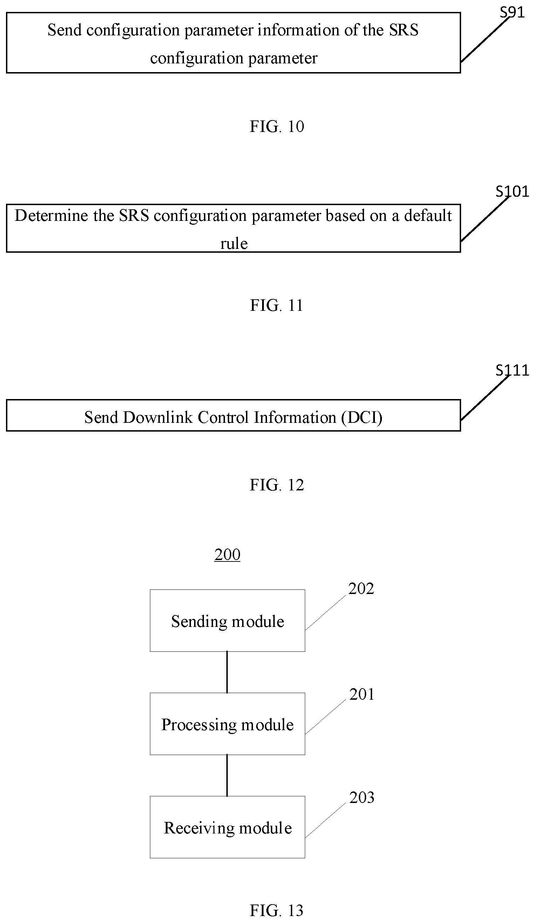

FIG. 10 shows a flowchart of yet another method for communication positioning according to an embodiment of the present disclosure. As shown in FIG. 10, the method may further include a step S91.

In the step S91, configuration parameter information of the SRS configuration parameter is sent.

In some embodiments, the network device may send the parameter configuration information to the terminal, and the parameter configuration information is configuration parameter information related to the SRS configuration parameter, so that the terminal may determine the corresponding SRS configuration parameter based on the parameter configuration information.

FIG. 11 shows a flowchart of still another method for communication positioning according to an embodiment of the present disclosure. As shown in FIG. 11, the method may further include a step S101.

In the step S101, the SRS configuration parameter is determined based on a default rule.

In some embodiments, the network device may determine the SRS configuration parameter based on the default rule. For example, the default rule may be preset or may be predefined in a protocol, which is not limited in the present disclosure.

The present disclosure provides a variety of ways to determine the SRS configuration parameter, so as to configure the SRS configuration parameter that can be applicable to the plurality of cells, thereby reducing the power consumption caused by using the SRS for positioning measurement.

In the communication method provided by embodiments of the present disclosure, in response to the SRS configuration parameter being associated with a reference signal, the configuration parameter information includes a reference signal identifier.

In some embodiments, the SRS configuration parameter may be associated with the reference signal, in which case the configuration parameter information may include the reference signal identifier. The SRS configuration parameter is associated with the reference signal, which may be understood as beam information in the SRS configuration parameter being a beam corresponding to the reference signal, and the path loss reference signal in the SRS configuration parameter being the reference signal. In other words, the spatial relation information or QCL Type D information when the SRS is sent is the same as spatial relation information or QCL Type D information corresponding to the reference signal, and a transmission power when the SRS is sent is determined by the received signal strength when the reference signal is received.

For example, the identifier can be an ID or an index.

For example, the network device may send the configuration parameter information to the terminal, and the configuration parameter information includes the reference signal identifier.

In the present disclosure, the SRS configuration parameter is associated with the reference signal, so that the corresponding SRS configuration parameter that can be applicable to the plurality of cells can be determined through the reference signal identifier, which can reduce the power consumption caused by using the SRS for positioning measurement.

In the communication method provided by embodiments of the present disclosure, in response to determining the SRS configuration parameter based on the default rule, the default rule includes: the reference signal being sent, and the reference signal being used by the terminal to determine the SRS configuration parameter associated with the reference signal.

In some embodiments, in response to determining the SRS configuration parameter based on the default rule, the default rule may include: sending the reference signal to the terminal, and the reference signal can be used by the terminal to determine the SRS configuration parameter associated with the reference signal. The SRS configuration parameter is associated with the reference signal, which can be understood that the beam information in the SRS configuration parameter is the beam corresponding to the reference signal, and the path loss reference signal in the SRS configuration parameter is the reference signal. In other words, the spatial relation information or the QCL Type D information when the SRS is sent is the same as the spatial relation information or the QCL Type D information corresponding to the reference signal; and the transmission power when the SRS is sent is determined by the received signal strength when the reference signal is received.

For example, the network device sends a reference signal to the terminal, and the terminal determines a signal strength of the reference signal. If the signal strength of the reference signal is greater than or equal to a preset reference signal threshold, the terminal can determine the SRS configuration parameter associated with the reference signal and send the SRS based on the SRS configuration parameter. Since the terminal already knows the SRS configuration parameter associated with the reference signal in advance, the terminal can determine, based on the reference signal, the SRS configuration parameter associated with the reference signal. That is, it can be understood that the terminal already knows SRS configuration parameters associated with different reference signals in advance, and the terminal can determine, based on signal strengths of individual reference signals, that the SRS can be sent based on the SRS configuration parameter associated with the specified reference signal, and the signal strength of the specified reference signal needs to be greater than or equal to the preset reference signal threshold.

In the present disclosure, the SRS configuration parameter than can be applicable to the plurality of cells can be determined according to the signal strength of the reference signal, which can reduce the power consumption caused by using the SRS for positioning measurement.

In the communication method provided by embodiments of the present disclosure, an SRS resource corresponding to the reference signal is determined based on reference signal information, the reference signal information includes a reference signal time domain position and/or a reference signal identifier; and/or, the SRS resource corresponding to the reference signal is determined based on first information, and the first information includes a paging Radio Network Temporary Identity (RNTI) and/or a paging time domain position of the terminal.

In some embodiments, the SRS resource corresponding to the reference signal may be determined based on the reference signal information. The reference signal information may include the reference signal time domain position and/or the reference signal identifier. It can also be understood that the reference signal information has a certain correlation with the SRS resource.

For example, the SRS resource corresponding to the reference signal can be determined based on the reference signal time domain position and/or the reference signal identifier. Therefore, it can also be considered that SRS resources corresponding to different reference signal time domain positions and/or reference signal identifiers are related to the reference signal information. It can be understood that the SRS resource is a resource used to send the SRS. Alternatively, since the SRS configuration parameters are some configuration parameters related to sending the SRS, the SRS resource can also be considered as a resource corresponding to the SRS configuration parameter. A correspondence between the reference signal information and the SRS resources can be determined based on configuration information sent by the network device, or based on a default rule.

Taking the reference signal as the SSB as an example, the SRS resource, such as an SRS time domain resource, may be at K1 symbols after a time domain position of the SSB. Taking the reference signal as a TRS as an example, the SRS resource, such as the SRS time domain resource, may be at K2 symbols after a time domain position of the TRS.

Alternatively, the reference signal information may also include any other possible information related to the reference signal, which is not limited in the present disclosure.

In some embodiments, the SRS resource corresponding to the reference signal can be determined based on the first information. The first information includes a paging RNTI and/or a paging time domain position of the terminal. It can also be understood that the first information has a certain correlation with the SRS resource. The first information can be considered as terminal information related to the terminal.

For example, the SRS resource corresponding to the reference signal may be determined based on the paging RNTI and/or the paging time domain position of the terminal. Therefore, it can also be considered that the paging RNTI and/or the paging time domain position of the terminal is related to the SRS resource.

Alternatively, the first information may also include any other possible information related to the terminal, which is not limited in the present disclosure.

The present disclosure provides a variety of ways to determine the SRS resource, so that the SRS of the SRS configuration parameter applicable to the plurality of cells can be sent based on the SRS resource, which can reduce the power consumption caused by using the SRS for positioning measurement.

In the communication method provided by embodiments of the present disclosure, SRS resources corresponding to the same reference signal information in different cells have the same configuration.

In some embodiments, in the different cells, the SRS resources corresponding to the same reference signal information have the same configuration.

In the present disclosure, the same reference signal information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In the communication method provided by embodiments of the present disclosure, different reference signal information corresponds to different SRS configuration parameters.

In some embodiments, the SRS configuration parameters corresponding to the different reference signal information are different. It can also be considered that SRS configuration parameters corresponding to the same reference signal information are the same.

In the present disclosure, the same reference signal information corresponds the same SRS configuration parameter, so that the terminal can send the SRS using the same SRS configuration parameter in the different cells, thereby reducing the power consumption caused by using the SRS for positioning measurement.

In the communication method provided by embodiments of the present disclosure, the reference signal includes at least one of: a Synchronization Signal Block (SSB); a Channel State Information Reference Signal (CSI-RS); or a Tracking Reference Signal (TRS).

In some embodiments, the reference signal may be the SSB. In this case, the reference signal identifier may be an SSB ID.

In some embodiments, the reference signal may be the CSI-RS. In this case, the reference signal identifier may be a CSI-RS ID.

In some embodiments, the reference signal may be the TRS. In this case, the reference signal identifier may be a TRS ID.

In some embodiments, the reference signal may be the SSB and the CSI-RS. In this case, the reference signal identifier may be the SSB ID and the CSI-RS ID.

In some embodiments, the reference signal may be the SSB and the TRS. In this case, the reference signal identifier may be the SSB ID and the TRS ID.

In some embodiments, the reference signal may be the CSI-RS and the TRS. In this case, the reference signal identifier may be the CSI-RS ID and the TRS ID.

In some embodiments, the reference signal may be the SSB, the CSI-RS and the TRS. In this case, the reference signal identifier may be the SSB ID, the CSI-RS ID and the TRS.

The present disclosure is applicable to situations of a variety of different reference signals. By configuring the SRS configuration parameter that can be applicable to the plurality of cells, the power consumption caused by using the SRS for positioning measurement can be reduced.

In the communication method provided by embodiments of the present disclosure, in response to the SRS configuration parameter being associated with a TCI state of the CORESET, the configuration parameter information includes a CORESET identity corresponding to the SRS configuration parameter.

In some embodiments, the SRS configuration parameter may be associated with the TCI state of the CORESET. In this case, the configuration parameter information may include the CORESET identity corresponding to the SRS configuration parameter.

For example, the configuration parameter information sent by the network device to the terminal may include the CORESET identity, so that the terminal can determine, based on the CORESET identity and according to an association relationship between the SRS configuration parameters and the CORESETs, the SRS configuration parameter corresponding to the CORESET identity. It can be understood that the CORESET identity can indicate a specified CORESET, and then the TCI state of the specified CORESET can be determined. The TCI state will indicate the reference signal identifier corresponding to the QCL Type D, and/or the path loss reference signal identifier. Therefore, it can also be considered that the SRS configuration parameter can be determined based on the TCI state of the CORESET, and the terminal can send the SRS to the network device based on the SRS configuration parameter determined based on the TCI state of the CORESET.

In the present disclosure, the SRS configuration parameter is associated with the CORESET, so that the TCI state corresponding to the specified CORESET can be indicated by the CORESET identity, and the corresponding SRS configuration parameter that can be applicable to the plurality of cells can be determined, which can reduce the power consumption caused by using the SRS for positioning measurement.

In the communication method provided by embodiments of the present disclosure, in response to determining the SRS configuration parameter based on the default rule, the default rule includes: the SRS configuration parameter being determined based on the TCI state of the CORESET corresponding to the paging information.

In some embodiments, in response to determining the SRS configuration parameter based on the default rule, the default rule may include: determining the SRS configuration parameter based on the TCI state of the CORESET corresponding to the paging information.

For example, the SRS configuration parameter is pre-associated with the TCI state of the CORESET, so the terminal can determine, according to the TCI state of the CORESET corresponding to the paging information, the SRS configuration parameter associated with the TCI state of the CORESET. That is, since the TCI state indicates the reference signal identifier corresponding to the QCL Type D and/or the path loss reference signal identifier, the SRS configuration parameter can be determined based on the TCI state of the CORESET, so that the terminal can determine the SRS configuration parameter based on the TCI state of the CORESET.

In the present disclosure, the SRS configuration parameter that can be applicable to the plurality of cells can be determined according to the TCI state of the CORESET corresponding to the paging information, which can reduce the power consumption caused by using the SRS for positioning measurement.

In the communication method provided by embodiments of the present disclosure, the SRS resource corresponding to the CORESET is determined based on second information, and the second information includes at least one of a paging time domain position, a paging identity, or a paging RNTI.

In some embodiments, the SRS resource corresponding to the CORESET may be determined based on the second information. The second information includes at least one of a paging time domain position, a paging identity, or a paging RNTI. It can also be considered that the terminal determines, based on the second information, the SRS resource corresponding to the TCI state of the CORESET.

The second information may include the paging time domain position, the paging identity and/or the paging RNTI. It can also be understood that the second information has a certain correlation with the SRS resource. The second information may be considered as paging information related to the paging.

For example, the SRS resource corresponding to the CORESET may be determined based on the paging time domain position, the paging identity and/or the paging RNTI. Therefore, it can also be considered that the paging time domain position, the paging identity and/or the paging RNTI are related to the SRS resource.

For example, the SRS resource, such as the SRS time domain resource, may be at K3 symbols after the paging time domain position.

For another example, the SRS resource is related to the paging RNTI, that is, SRS resources of the terminal corresponding to different paging RNTIs can be distinguished to prevent collision.

Alternatively, the second information may also include any other possible information related to the paging, which is not limited in the present disclosure.

The present disclosure provides a way to determine the SRS resource, so that the SRS of the SRS configuration parameter applicable to the plurality of cells can be sent based on the SRS resource, which can reduce the power consumption caused by using the SRS for positioning measurement.

In the communication method provided by embodiments of the present disclosure, SRS resources corresponding to the same second information in different cells have the same configuration.

In some embodiments, in the different cells, the SRS resources corresponding to the same second information have the same configuration.

In the present disclosure, the same second information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In the communication method provided by embodiments of the present disclosure, different TCI states correspond to different SRS configuration parameters.

In some embodiments, the SRS configuration parameters corresponding to the different TCI states are different. It can also be considered that the same TCI state corresponds to the same SRS configuration parameter.

For example, different SRS configuration parameters applicable to the plurality of cells may be determined through the different TCI states. The different TCI states refer to at least one of the reference signal identifier corresponding to the QCL Type D and/or the path loss reference signal identifier indicated by the TCI state being different.

For another example, in different cells, the same SRS configuration parameter may be determined through the same TCI state.

It can be understood that the corresponding CORESET that sends the paging can be determined based on the paging information, and the SRS configuration parameter can be determined based on the TCI state of the CORESET. Therefore, it can also be considered that the SRS configuration parameters corresponding to the paging information from different CORESETs are different.

In the present disclosure, the same TCI state corresponds to the same SRS configuration parameter, so that the terminal can send the SRS using the same SRS configuration parameter in the different cells, thereby reducing the power consumption caused by using the SRS for positioning measurement.

In the communication method provided by embodiments of the present disclosure, different SRS configuration parameters correspond to different SRS resources, and the SRS resource includes at least one of: a time domain resource, a frequency domain resource or an SRS reference signal sequence.

In some embodiments, the SRS resource may include the time domain resource.

In some embodiments, the SRS resource may include the frequency domain resource.

In some embodiments, the SRS resource may include the SRS reference signal sequence.

In some embodiments, the SRS resource may include the time domain resource and the frequency domain resource.

In some embodiments, the SRS resource may include the time domain resource and the SRS reference signal sequence.

In some embodiments, the SRS resource may include the frequency domain resource and the SRS reference signal sequence.

In some embodiments, the SRS resource may include the time domain resource, the frequency domain resource, and the SRS reference signal sequence.

The present disclosure provides a variety of implementations of the SRS resource, so that a terminal can use the SRS resources in the different cells to send the SRS of the SRS configuration parameter applicable to the plurality of cells, thereby reducing the power consumption caused by using the SRS for positioning measurement.

In the communication method provided by embodiments of the present disclosure, the SRS configuration parameter includes at least one of: spatial relation information (e.g., spatialrelationinfo), Uplink (UL) TCI state information or a pathloss Reference Signal (RS).

In some embodiments, the SRS configuration parameter may include the spatialrelationinfo.

In some embodiments, the SRS configuration parameter may include the UL TCI state information.

In some embodiments, the SRS configuration parameter may include the pathloss RS.

In some embodiments, the SRS configuration parameter may include the spatialrelationinfo and the UL TCI state information.

In some embodiments, the SRS configuration parameter may include the spatialrelationinfo and the pathloss RS.

In some embodiments, the SRS configuration parameter may include the UL TCI state information and the pathloss RS.

In some embodiments, the SRS configuration parameter may include the spatialrelationinfo, the UL TCI state information, and the pathloss RS.

The spatialrelationinfo and the UL TCI state information can be considered as configuration parameters related to the beam of the SRS.

The present disclosure provides a variety of implementations of the SRS configuration parameter. By configuring the SRS configuration parameter that can be applicable to the plurality of cells, the power consumption caused by using the SRS for positioning measurement can be reduced.

In the communication method provided by embodiments of the present disclosure, FIG. 12 shows a flowchart of another method for communication positioning according to an embodiment of the present disclosure. As shown in FIG. 12, the method may further include a step S111.

In the step S111, Downlink Control Information (DCI) is sent.

In some embodiments, the network device may also send the DCI to the terminal. The DCI may include specified paging information or PEI. The specified paging information or the PEI is intended to indicate the terminal to send the SRS. The specified paging information or the PEI may include paging information corresponding to an RNTI for indicating the terminal to send the SRS, or the DCI may include an information field for indicating the terminal to send the SRS. Therefore, the DCI including the specified paging information or the PEI may be used to indicate the terminal to send the SRS based on the SRS configuration parameter.

In the present disclosure, when the DCI indicates the terminal to send the SRS, the SRS can be sent based on the SRS configuration parameter that can be applicable to the plurality of cells, thereby reducing the power consumption caused by using the SRS for positioning measurement.

It should be noted that those skilled in the art can understand that the various implementations/embodiments involved in embodiments of the present disclosure can be used in conjunction with the aforementioned embodiments or can be used independently. Whether used alone or in conjunction with the aforementioned embodiments, the implementation principle is similar. In embodiments of the present disclosure, some embodiments are described in terms of implementation methods used together. Alternatively, those skilled in the art can understand that such examples are not limitations of the embodiments of the present disclosure.

Based on the same concept, embodiments of the present disclosure further provide an apparatus and a device for communication positioning.

It can be understood that in order to implement the above-mentioned functions, the apparatus and the device for communication positioning provided by embodiments of the present disclosure include corresponding hardware structures and/or software modules for executing respective functions. In combination with units and algorithm steps of various examples disclosed in embodiments of the present disclosure, embodiments of the present disclosure may be implemented by in a form of hardware or a combination of the hardware and computer software. Whether a certain function is implemented in the fashion of hardware or in the fashion that the computer software drives the hardware depends on a particular application and design constraints of the technical solution. A person skilled in the art may implement the described functions with different methods for each particular application, but such an implementation shall not be regarded as going beyond the scope of the technical solution according to embodiments of the present disclosure.

FIG. 13 shows a schematic diagram of an apparatus for communication positioning according to an embodiment of the present disclosure. Referring to FIG. 13, the apparatus 200 includes: a processing module 201, configured to determine a Sounding Reference Signal (SRS) configuration parameter, and the SRS configuration parameter is applicable to a plurality of cells; and a sending module 202, configured to send an SRS based on the SRS configuration parameter, and the SRS is configured for positioning measurement.

In the present disclosure, by configuring the SRS configuration parameter that can be applicable to the plurality of cells, the power consumption caused by using the SRS for positioning measurement can be reduced.

In an implementation, the processing module 201 is further configured to: receive configuration parameter information of the SRS configuration parameter sent by a network device; and/or and/or determine the SRS configuration parameter based on a default rule.

The present disclosure provides a variety of ways to determine the SRS configuration parameter, so as to configure the SRS configuration parameter that can be applicable to the plurality of cells, thereby reducing the power consumption caused by using the SRS for positioning measurement.

In an implementation, in response to the SRS configuration parameter being associated with a reference signal, the configuration parameter information includes a reference signal identifier.

In the present disclosure, the SRS configuration parameter is associated with the reference signal, so that the corresponding SRS configuration parameter that can be applicable to the plurality of cells can be determined through the reference signal identifier, which can reduce the power consumption caused by using the SRS for positioning measurement.

In an implementation, in response to determining the SRS configuration parameter based on the default rule, the default rule includes: a reference signal being determined based on a signal strength of the received reference signal; and the SRS configuration parameter associated with the reference signal being determined according to the reference signal.

In the present disclosure, the SRS configuration parameter than can be applicable to the plurality of cells can be determined according to the signal strength of the reference signal, which can reduce the power consumption caused by using the SRS for positioning measurement.

In an implementation, the processing module 201 is further configured to: determine, based on reference signal information, an SRS resource corresponding to the reference signal, wherein the reference signal information includes a reference signal time domain position and/or the reference signal identifier; and/or, determine, based on first information, the SRS resource corresponding to the reference signal, wherein the first information includes a paging Radio Network Temporary Identity (RNTI) and/or a paging time domain position of the terminal.

The present disclosure provides a variety of ways to determine the SRS resource, so that the SRS of the SRS configuration parameter applicable to the plurality of cells can be sent based on the SRS resource, which can reduce the power consumption caused by using the SRS for positioning measurement.

In an implementation, SRS resources corresponding to the same reference signal information in different cells have the same configuration.

In the present disclosure, the same reference signal information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In an implementation, SRS configuration parameters corresponding to different reference signal information are different.

In the present disclosure, the same reference signal information corresponds the same SRS configuration parameter, so that the terminal can send the SRS using the same SRS configuration parameter in the different cells, thereby reducing the power consumption caused by using the SRS for positioning measurement.

In an implementation, the reference signal includes at least one of: a Synchronization Signal Block (SSB); a Channel State Information Reference Signal (CSI-RS); or a Tracking Reference Signal (TRS).

The present disclosure is applicable to situations of a variety of different reference signals. By configuring the SRS configuration parameter that can be applicable to the plurality of cells, the power consumption caused by using the SRS for positioning measurement can be reduced.

In an implementation, in response to the SRS configuration parameter being associated with a Transmission Configuration Indication (TCI) state of a Control Resource Set (CORESET), the configuration parameter information includes a CORESET identity corresponding to the SRS configuration parameter.

In the present disclosure, the SRS configuration parameter is associated with the CORESET, so that the TCI state corresponding to the specified CORESET can be indicated by the CORESET identity, and the corresponding SRS configuration parameter that can be applicable to the plurality of cells can be determined, which can reduce the power consumption caused by using the SRS for positioning measurement.

In an implementation, in response to determining the SRS configuration parameter based on the default rule, the processing module 201 is further configured to: determine the SRS configuration parameter based on a TCI state of a CORESET corresponding to paging information.

In the present disclosure, the SRS configuration parameter that can be applicable to the plurality of cells can be determined according to the TCI state of the CORESET corresponding to the paging information, which can reduce the power consumption caused by using the SRS for positioning measurement.

In an implementation, the processing module 201 is further configured to: determine, based on second information, an SRS resource corresponding to the CORESET, wherein the second information includes at least one of a paging time domain position, a paging identity, or a paging RNTI.

The present disclosure provides a way to determine the SRS resource, so that the SRS of the SRS configuration parameter applicable to the plurality of cells can be sent based on the SRS resource, which can reduce the power consumption caused by using the SRS for positioning measurement.

In an implementation, SRS resources corresponding to the same second information in different cells have the same configuration.

In the present disclosure, the same second information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In an implementation, SRS configuration parameters corresponding to different TCI states are different.

In the present disclosure, the same TCI state corresponds to the same SRS configuration parameter, so that the terminal can send the SRS using the same SRS configuration parameter in the different cells, thereby reducing the power consumption caused by using the SRS for positioning measurement.

In an implementation, SRS resources corresponding to different SRS configuration parameters are different, and the SRS resource includes at least one of: a time domain resource; a frequency domain resource; or an SRS reference signal sequence.

The present disclosure provides a variety of implementations of the SRS resource, so that a terminal can use the SRS resources in the different cells to send the SRS of the SRS configuration parameter applicable to the plurality of cells, thereby reducing the power consumption caused by using the SRS for positioning measurement.

In an implementation, the SRS configuration parameter includes at least one of: spatial relation information; Uplink (UL) TCI state information; or a pathloss reference signal.

The present disclosure provides a variety of implementations of the SRS configuration parameter. By configuring the SRS configuration parameter that can be applicable to the plurality of cells, the power consumption caused by using the SRS for positioning measurement can be reduced.

In an implementation, the apparatus 200 further includes: a receiving module 203, configured to receive Downlink Control Information (DCI), wherein the DCI includes specified paging information or Paging Early Indication (PEI); and the sending module 202 is further configured to, in response to the DCI including the specified paging information or the PEI, send the SRS based on the SRS configuration parameter.

In the present disclosure, when the DCI indicates the terminal to send the SRS, the SRS can be sent based on the SRS configuration parameter that can be applicable to the plurality of cells, thereby reducing the power consumption caused by using the SRS for positioning measurement.

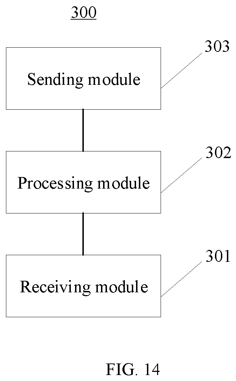

FIG. 14 shows a schematic diagram of another apparatus for communication positioning according to an embodiment of the present disclosure. Referring to FIG. 14, the apparatus 300 includes: a receiving module 301, configured to receive a Sounding Reference Signal (SRS) sent, based on an SRS configuration parameter, by a terminal, wherein the SRS configuration parameter is applicable to a plurality of cells; and a processing module 302, configured to perform positioning measurement based on the SRS.

In the present disclosure, by configuring the SRS configuration parameter that can be applicable to the plurality of cells, the power consumption caused by using the SRS for positioning measurement can be reduced.

In an implementation, the apparatus 300 further includes: a sending module 303, configured to send configuration parameter information of the SRS configuration parameter; and/or the SRS configuration parameter is determined based on a default rule.

The present disclosure provides a variety of ways to determine the SRS configuration parameter, so as to configure the SRS configuration parameter that can be applicable to the plurality of cells, thereby reducing the power consumption caused by using the SRS for positioning measurement.

In an implementation, in response to the SRS configuration parameter being associated with a reference signal, the configuration parameter information includes a reference signal identifier.

In the present disclosure, the SRS configuration parameter is associated with the reference signal, so that the corresponding SRS configuration parameter that can be applicable to the plurality of cells can be determined through the reference signal identifier, which can reduce the power consumption caused by using the SRS for positioning measurement.

In an implementation, in response to the SRS configuration parameter being determined based on the default rule, the sending module 303 is further configured to: send a reference signal, and the reference signal is used by the terminal to determine the SRS configuration parameter associated with the reference signal.

In the present disclosure, the SRS configuration parameter than can be applicable to the plurality of cells can be determined according to the signal strength of the reference signal, which can reduce the power consumption caused by using the SRS for positioning measurement.

In an implementation, an SRS resource corresponding to the reference signal is determined based on reference signal information, wherein the reference signal information includes a reference signal time domain position and/or the reference signal identifier; and/or, the SRS resource corresponding to the reference signal is determined based on first information, wherein the first information includes a paging Radio Network Temporary Identity (RNTI) and/or a paging time domain position of the terminal.

The present disclosure provides a variety of ways to determine the SRS resource, so that the SRS of the SRS configuration parameter applicable to the plurality of cells can be sent based on the SRS resource, which can reduce the power consumption caused by using the SRS for positioning measurement.

In an implementation, SRS resources corresponding to the same reference signal information in different cells have the same configuration.

In the present disclosure, the same reference signal information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In an implementation, SRS configuration parameters corresponding to different reference signal information are different.

In the present disclosure, the same reference signal information corresponds the same SRS configuration parameter, so that the terminal can send the SRS using the same SRS configuration parameter in the different cells, thereby reducing the power consumption caused by using the SRS for positioning measurement.

In an implementation, the reference signal includes at least one of: a Synchronization Signal Block (SSB); a Channel State Information Reference Signal (CSI-RS); or a Tracking Reference Signal (TRS).

The present disclosure is applicable to situations of a variety of different reference signals. By configuring the SRS configuration parameter that can be applicable to the plurality of cells, the power consumption caused by using the SRS for positioning measurement can be reduced.

In an implementation, in response to the SRS configuration parameter being associated with a Transmission Configuration Indication (TCI) state of a Control Resource Set (CORESET), the configuration parameter information includes a CORESET identity corresponding to the SRS configuration parameter.

In the present disclosure, the SRS configuration parameter is associated with the CORESET, so that the TCI state corresponding to the specified CORESET can be indicated by the CORESET identity, and the corresponding SRS configuration parameter that can be applicable to the plurality of cells can be determined, which can reduce the power consumption caused by using the SRS for positioning measurement.

In an implementation, in response to determining the SRS configuration parameter based on the default rule, the default rule includes: the SRS configuration parameter being determined based on a TCI state of a CORESET corresponding to paging information.

In the present disclosure, the SRS configuration parameter that can be applicable to the plurality of cells can be determined according to the TCI state of the CORESET corresponding to the paging information, which can reduce the power consumption caused by using the SRS for positioning measurement.

In an implementation, an SRS resource corresponding to the CORESET is determined based on second information, wherein the second information includes at least one of a paging time domain position, a paging identity, or a paging RNTI.

The present disclosure provides a way to determine the SRS resource, so that the SRS of the SRS configuration parameter applicable to the plurality of cells can be sent based on the SRS resource, which can reduce the power consumption caused by using the SRS for positioning measurement.

In an implementation, SRS resources corresponding to the same second information in different cells have the same configuration.

In the present disclosure, the same second information corresponds to the same SRS resource, so that the terminal can use the same SRS resource in the different cells to send the SRS of the SRS configuration parameter applicable to the plurality of cells, thereby reducing the power consumption caused by using the SRS for positioning measurement.

In an implementation, SRS configuration parameters corresponding to different TCI states are different.

In the present disclosure, the same TCI state corresponds to the same SRS configuration parameter, so that the terminal can send the SRS using the same SRS configuration parameter in the different cells, thereby reducing the power consumption caused by using the SRS for positioning measurement.

In an implementation, SRS resources corresponding to different SRS configuration parameters are different, and the SRS resource includes at least one of: a time domain resource; a frequency domain resource; or an SRS reference signal sequence.

The present disclosure provides a variety of implementations of the SRS resource, so that a terminal can use the SRS resources in the different cells to send the SRS of the SRS configuration parameter applicable to the plurality of cells, thereby reducing the power consumption caused by using the SRS for positioning measurement.

In an implementation, the SRS configuration parameter includes at least one of: spatial relation information; Uplink (UL) TCI state information; or a pathloss reference signal.

The present disclosure provides a variety of implementations of the SRS configuration parameter. By configuring the SRS configuration parameter that can be applicable to the plurality of cells, the power consumption caused by using the SRS for positioning measurement can be reduced.

In an implementation, the sending module 303 is further configured to: send Downlink Control Information (DCI), wherein the DCI includes specified paging information or Paging Early Indication (PEI), and the DCI including the specified paging information or the PEI is configured to indicate the terminal to send, based on the SRS configuration parameter, the SRS.

In the present disclosure, when the DCI indicates the terminal to send the SRS, the SRS can be sent based on the SRS configuration parameter that can be applicable to the plurality of cells, thereby reducing the power consumption caused by using the SRS for positioning measurement.

Regarding the apparatus in the above embodiments, the specific manner in which each module performs operations has been described in detail in the method embodiments, which will not be elaborated here.

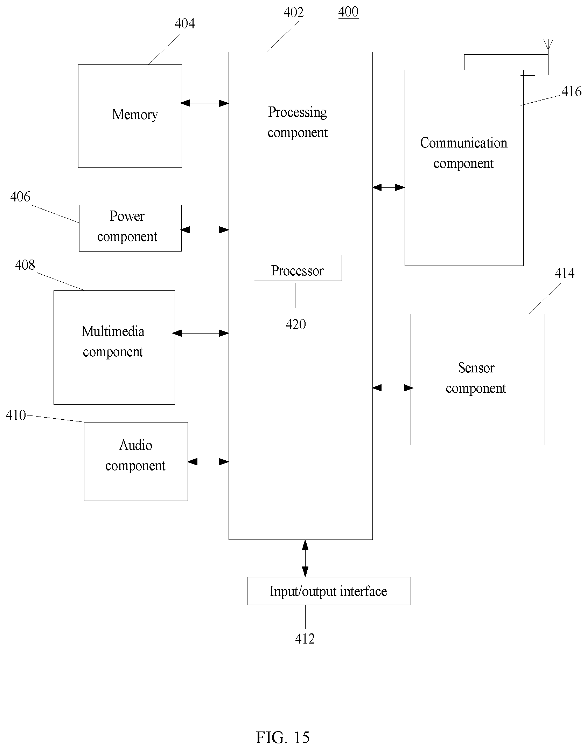

FIG. 15 shows a schematic diagram of a device for communication positioning according to an embodiment of the present disclosure. For example, the device 400 may be any terminal such as a mobile phone, a computer, a digital broadcast terminal, a messaging device, a gaming console, a tablet device, a medical device, an exercise device, a personal digital assistant, etc.

Referring to FIG. 15, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to complete all or part of the steps in the above described methods. Moreover, the processing component 402 may include one or more modules which facilitate the interaction between the processing component 402 and other components. For example, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide state assessments of various aspects of the device 400. For example, the sensor component 414 may detect an open/closed state of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 may access a wireless network based on a communication standard, such as Wi-Fi, 2G or 3G, or a combination thereof. In an embodiment, the communication component 416 receives a broadcast signal or broadcast associated information from an external broadcast management system via a broadcast channel. In an embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the device 400 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 404 including instructions, the above instructions may be executed by the processor 420 in the device 400 for completing the above-described methods. For example, the non-transitory computer-readable storage medium may be a ROM, a Random Access Memory (RAM), a CD-ROM, a magnetic tape, a floppy disc, an optical data storage device, and the like.

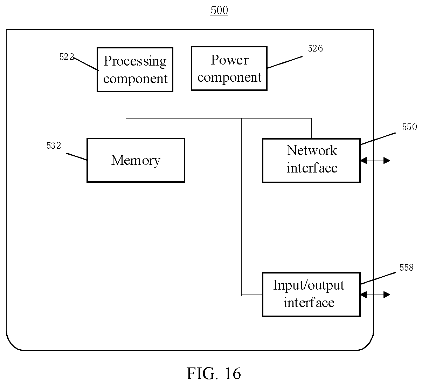

FIG. 16 shows a schematic diagram of another device for communication positioning according to an embodiment of the present disclosure. For example, the device 500 may be provided as a base station or a server. Referring to FIG. 16, the device 500 includes a processing component 522, which further includes one or more processors and a memory resource represented by a memory 532 for storing instructions executable by the processing component 522, such as an application program. The application program stored in the memory 532 may include one or more modules, each corresponding to a set of instructions. In addition, the processing component 522 is configured to execute the instructions to execute the aforementioned method.

The device 500 may further include: a power component 526 configured to perform power management of the device 500, a wired or wireless network interface 550 configured to connect the device 500 to the network, and an input/output (I/O) interface 558. The device 500 may operate an operating system stored in the memory 532, such as Windows Server TM, Mac OS XTM, UnixTM, LinuxTM, FreeBSDTM, or the like.

The present disclosure can reduce the power consumption caused by frequently obtaining the SRS configuration, and proposes the SRS configuration applicable to the plurality of cells. The spatialrelationinfo or UL TCI state (commonly known as beam) of the SRS that can be applicable to the plurality of cells and the reference signal for path loss estimation can be configured.

The present disclosure proposes an SRS related configuration method applicable to the plurality of cells, including the spatialrelationinfo or the UL TCI state (commonly known as beam) of the SRS, and the reference signal for path loss estimation, so as to ensure high-precision positioning while reducing positioning power consumption.

It can be further understood that in the present disclosure, "a plurality" refers to two or more, and other quantifiers are analogous to it. "and/or" is used to describe an associated relationship between associated objects and means three relationships, for instance, A and/or B may mean A alone, A and B together, and B alone. The character "/" generally indicates that the associated objects are in an "or" relationship. Singular forms "a", "an" and "the" are intended to include plural forms as well, unless the context clearly indicates otherwise.

It can be further understood that the terms "first", "second", etc. are used to describe various information, but the information should not be limited by these terms. These terms are merely used to distinguish the same type of information from each other and do not denote a particular order or degree of importance. Indeed, the expressions "first", "second", etc. may be used interchangeably. For instance, first information may also be referred to as second information, and similarly, second information may also be referred to as first information, without departing from the scope of the present disclosure.

It can be further understood the meanings of the words "in response to" and "if" involved in the present disclosure depend on the context and the actual usage scenario. For example, the word "in response to" as used herein can be interpreted as "upon" or "when" or "if" or "in case".

It can be further understood that although the operations in embodiments of the present disclosure are described in a specific order in the drawings, they should not be understood as requiring that the operations are performed in the specific order shown or in a serial order, or that all the operations shown are performed to get the desired result. In certain environments, multitasking and parallel processing may be advantageous.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for communication positioning, applied to a terminal, and comprising:
determining a Sounding Reference Signal (SRS) configuration parameter, wherein the SRS configuration parameter is applicable to a plurality of cells; and
sending an SRS based on the SRS configuration parameter, wherein the SRS is configured for positioning measurement.

2. The method according to claim 1, wherein determining the SRS configuration parameter comprises:
receiving configuration parameter information of the SRS configuration parameter sent by a network device; and/or
determining the SRS configuration parameter based on a default rule.

3. The method according to claim 2, wherein in response to the SRS configuration parameter being associated with a reference signal, the configuration parameter information comprises a reference signal identifier.

4. The method according to claim 2, wherein in response to determining the SRS configuration parameter based on the default rule, the default rule comprises:
a reference signal being determined based on a signal strength of the received reference signal; and
the SRS configuration parameter associated with the reference signal being determined according to the reference signal.

5. The method according to claim 3 or 4, wherein the method further comprises:
determining, based on reference signal information, an SRS resource corresponding to the reference signal, wherein the reference signal information comprises a reference signal time domain position and/or the reference signal identifier; and/or,
determining, based on first information, the SRS resource corresponding to the reference signal, wherein the first information comprises a paging Radio Network Temporary Identity (RNTI) and/or a paging time domain position of the terminal.

6. The method according to claim 5, wherein SRS resources corresponding to the same reference signal information in different cells have the same configuration.

7. The method according to claim 5 or 6, wherein SRS configuration parameters corresponding to different reference signal information are different.

8. The method according to any one of claims 3 to 7, wherein the reference signal comprises at least one of:
a Synchronization Signal Block (SSB);
a Channel State Information Reference Signal (CSI-RS); or
a Tracking Reference Signal (TRS).

9. The method according to claim 2, wherein in response to the SRS configuration parameter being associated with a Transmission Configuration Indication (TCI) state of a Control Resource Set (CORESET), the configuration parameter information comprises a CORESET identity corresponding to the SRS configuration parameter.

10. The method according to claim 2, wherein in response to determining the SRS configuration parameter based on the default rule, the default rule comprises:
the SRS configuration parameter being determined based on a TCI state of a CORESET corresponding to paging information.

11. The method according to claim 10, wherein the method further comprises:
determining, based on second information, an SRS resource corresponding to the CORESET, wherein the second information comprises at least one of a paging time domain position, a paging identity, or a paging RNTI.

12. The method according to claim 11, wherein SRS resources corresponding to the same second information in different cells have the same configuration.

13. The method according to any one of claims 10 to 12, wherein SRS configuration parameters corresponding to different TCI states are different.

14. The method according to any one of claims 1 to 13, wherein SRS resources corresponding to different SRS configuration parameters are different, and the SRS resource comprises at least one of:
a time domain resource;
a frequency domain resource; or
an SRS reference signal sequence.

15. The method according to any one of claims 1 to 14, wherein the SRS configuration parameter comprises at least one of:
spatial relation information;
Uplink (UL) TCI state information; or
a pathloss reference signal.

16. The method according to any one of claims 1 to 15, wherein the method further comprises:
receiving Downlink Control Information (DCI), wherein the DCI comprises specified paging information or Paging Early Indication (PEI); and
sending the SRS based on the SRS configuration parameter comprises:
in response to the DCI comprising the specified paging information or the PEI, sending the SRS based on the SRS configuration parameter.

17. A method for communication positioning, applied to a network device, and comprising:
receiving a Sounding Reference Signal (SRS) sent, based on an SRS configuration parameter, by a terminal, wherein the SRS configuration parameter is applicable to a plurality of cells; and
performing positioning measurement based on the SRS.

18. The method according to claim 17, wherein the method further comprises:
sending configuration parameter information of the SRS configuration parameter; and/or,
determining the SRS configuration parameter based on a default rule.

19. The method according to claim 18, wherein in response to the SRS configuration parameter being associated with a reference signal, the configuration parameter information comprises a reference signal identifier.

20. The method according to claim 18, wherein in response to the SRS configuration parameter being determined based on the default rule, the default rule comprises:
the reference signal being sent, and the reference signal being used by the terminal to determine the SRS configuration parameter associated with the reference signal.

21. The method according to claim 19 or 20, wherein:
an SRS resource corresponding to the reference signal is determined based on reference signal information, wherein the reference signal information comprises a reference signal time domain position and/or the reference signal identifier; and/or,
the SRS resource corresponding to the reference signal is determined based on first information, wherein the first information comprises a paging Radio Network Temporary Identity (RNTI) and/or a paging time domain position of the terminal.

22. The method according to claim 21, wherein SRS resources corresponding to the same reference signal information in different cells have the same configuration.

23. The method according to claim 21 or 22, wherein SRS configuration parameters corresponding to different reference signal information are different.

24. The method according to any one of claims 19 to 23, wherein the reference signal comprises at least one of:
a Synchronization Signal Block (SSB);
a Channel State Information Reference Signal (CSI-RS); or
a Tracking Reference Signal (TRS).

25. The method according to claim 18, wherein in response to the SRS configuration parameter being associated with a Transmission Configuration Indication (TCI) state of a Control Resource Set (CORESET), the configuration parameter information comprises a CORESET identity corresponding to the SRS configuration parameter.

26. The method according to claim 18, wherein in response to determining the SRS configuration parameter based on the default rule, the default rule comprises:
the SRS configuration parameter being determined based on a TCI state of a CORESET corresponding to paging information.

27. The method according to claim 26, wherein an SRS resource corresponding to the CORESET is determined based on second information, wherein the second information comprises at least one of a paging time domain position, a paging identity, or a paging RNTI.

28. The method according to claim 27, wherein SRS resources corresponding to the same second information in different cells have the same configuration.

29. The method according to any one of claims 26 to 28, wherein SRS configuration parameters corresponding to different TCI states are different.

30. The method according to any one of claims 17 to 29, wherein SRS resources corresponding to different SRS configuration parameters are different, and the SRS resource comprises at least one of:
a time domain resource;
a frequency domain resource; or
an SRS reference signal sequence.

31. The method according to any one of claims 17 to 30, wherein the SRS configuration parameter comprises at least one of:
spatial relation information;
Uplink (UL) TCI state information; or
a pathloss reference signal.

32. The method according to any one of claims 17 to 31, wherein the method further comprises:
sending Downlink Control Information (DCI), wherein the DCI comprises specified paging information or Paging Early Indication (PEI), and the DCI comprising the specified paging information or the PEI is configured to indicate the terminal to send, based on the SRS configuration parameter, the SRS.

33. An apparatus for communication positioning, configured in a terminal, and comprising:
a processing module, configured to determine a Sounding Reference Signal (SRS) configuration parameter, wherein the SRS configuration parameter is applicable to a plurality of cells; and
a sending module, configured to send an SRS based on the SRS configuration parameter, wherein the SRS is configured for positioning measurement.

34. An apparatus for communication positioning, comprising:
a receiving module, configured to receive a Sounding Reference Signal (SRS) sent, based on an SRS configuration parameter, by a terminal, wherein the SRS configuration parameter is applicable to a plurality of cells; and
a processing module, configured to perform positioning measurement based on the SRS.

35. A device for communication positioning, comprising:
a processor; and
a memory, configured to store executable instructions of the processor;
wherein the processor is configured to perform the method according to any one of claims 1 to 16.

36. A device for communication positioning, comprising:
a processor; and
a memory, configured to store executable instructions of the processor;
wherein the processor is configured to perform the method according to any one of claims 17 to 32.

37. A non-transitory computer-readable storage medium, wherein instructions in the storage medium, when executed by a processor of a terminal, enable the terminal to perform the method according to any one of claims 1 to 16.

38. A non-transitory computer-readable storage medium, wherein instructions in the storage medium, when executed by a processor of a network device, enable the network device to perform the method according to any one of claims 17 to 32.
